# EUROPÄISCHE PATENTSCHRIFT

(11) **EP 1 827 865 B1**
(45) Veröffentlichungstag und Bekanntmachung des Hinweises auf die Patenterteilung: **09.07.2008**
(21) Anmeldenummer: 05816589.5
(22) Anmeldetag: 05.12.2005
(51) Int. Cl.: B42D 15/00

(54) **OPTISCH VARIABLES ELEMENT MIT ELEKTRISCH AKTIVER SCHICHT**
OPTICALLY VARIABLE ELEMENT COMPRISING AN ELECTRICALLY ACTIVE LAYER
ELEMENT OPTIQUEMENT VARIABLE COMPORTANT UNE COUCHE ELECTRIQUEMENT ACTIVE

(30) Priorität: 10.12.2004 DE 102004059798
(43) Veröffentlichungstag der Anmeldung: 05.09.2007
(73) Patentinhaber: OVD Kinegram AG, 6301 Zug (CH)
(72) Erfinder: SCHILLING, Andreas, CH-6332 Hagendorn (CH); TOMPKIN, Wayne, Robert, CH-5400 Baden (CH); PETERS, John, A., CH-8804 Au (CH)
(74) Vertreter: Zinsinger, Norbert
(86) Internationale Anmeldenummer: PCT/EP2005/013008
(87) Internationale Veröffentlichungsnummer: WO 2006/061171

(56) Entgegenhaltungen:
- EP-A- 1 179 811
- EP-A- 1 383 075
- DE-A1- 10 163 267
- US-A1- 2003 164 611

## Beschreibung

Die Erfindung betrifft ein Sicherheitselement mit mindestens einem optisch variablen Element (Optically Variable Device - OVD).

OVDs werden als Sicherheitselemente beispielsweise für Banknoten, Sicherheitsdokumente oder Warenetiketten eingesetzt. Da ihre optische Wirkung beispielsweise auf Lichtbrechung oder Lichtbeugung an optischen Mikrostrukturen beruht, können sie mit Farbkopierverfahren nicht nachgeahmt werden.

Es wurden optisch variable Sicherheitselemente vorgeschlagen, die in mehreren Schichten unterschiedliche optische Effekte bereitstellen:

In WO 01/03945 A1 wird ein Sicherheitselement beschrieben, das ein durchsichtiges Substrat aufweist, auf dessen eine Seite ein Dünnfilm aufgetragen ist, der eine wahrnehmbare Farbverschiebung abhängig von dem Blickwinkel des Betrachters erzeugt. Zur weiteren Erhöhung der Kopiersicherheit ist auf der gegenüberliegenden Seite des transparenten Substrats ein Diffraktionsmuster aufgebracht. Dieses Diffraktionsmuster wirkt als Beugungsgitter, so daß sich mittels dieses zweidimensionalen Musters beispielsweise die Illusion eines dreidimensionalen Bildes für den Betrachter erzeugen läßt. Auf diese Weise wird erreicht, daß sich an jeder Stelle des optisch variablen Sicherheitselements die durch die Dünnfilmschicht und die durch das diffraktive Muster erzeugten optischen Effekte überlagern und sich damit insgesamt ein aus diesen beiden Effekten zusammengesetzter optischer Effekt ergibt.

In der WO 02/00445 A1 werden Maßnahmen vorgeschlagen, um die in mehreren Schichten eines optisch variablen Sicherheitselements erzeugten optischen Effekte voneinander zu entkoppeln. Dazu wird als eine Möglichkeit vorgeschlagen, eine opake Schicht zwischen einer Reliefstruktur, die mittels Beugung ein holographisches Bild erzeugt, und einem Dünnfilm, der einen Farbwechsel erzeugt, aufzubringen. Als weitere Möglichkeit wird vorgeschlagen, anstatt der opaken Zwischenschicht eine oder mehrere hoch brechende Schichten und eine Klebeschicht anzuordnen. Mittels dieser Schichten wird die Reflexion und somit die Lichtstärke im Bereich der ein holographisches Bild erzeugenden Reliefstruktur erhöht, und das holographische Bild tritt damit gegenüber dem Farbverschiebungseffekt des Dünnfilms hervor.

Weiter ist es bekannt, Elemente zur Radiofrequenz-Identifikation (RFID) zur Diebstahlsicherung und Warenkennzeichnung einzusetzen. RFID beruht auf der drahtlosen Radiofrequenz-Kommunikation zwischen einem Transponder, der an ein Objekt oder eine Person zugeteilt ist und einem Lesegerät. Der Transponder enthält gewöhnlich eine Antenne, die mit einem Halbleiterchip verbunden ist. Die Kommunikation zwischen dem Transponder und dem Lesegerät besteht üblicherweise in einer Übermittlung eines Identifikationscodes von dem Transponder zu dem Lesegerät.

Zum Beispiel beschreibt US 4 220 956 eine Herstellungsmethode für eine RF-Antenne für einen RFID-Transponder, bei welcher die Antenne durch Ätzen einer leitfähigen Schicht mit einer Dicke von < 125 µm erzeugt wird, die auf einer Seite eines dünnen Substrats aufgebracht ist. Der Ätzprozeß ist dabei so ausgebildet wie der zur Herstellung gedruckter Schaltungen in der Elektronikindustrie.

Weitere Sicherheitselemente sind aus der US 2003/0164611 bekannt.

Der Erfindung liegt nun die Aufgabe zugrunde, Sicherheitselemente mit optisch variablen Elementen zu schaffen, die besonders fälschungssicher sind.

Die Aufgabe der Erfindung wird mit einem Sicherheitselement nach Anspruch 1 gelöst. Optisch variable Elemente zeigen einen sich in Abhängigkeit von Betrachtungsrichtung und/oder Beleuchtungsart und/oder Beleuchtungsrichtung ändernden optischen Effekt. Solche Effekte können beispielsweise durch spezielle Oberflächenreliefe (Beugungsgitter, Hologramme) und/oder durch spezielle Anordnung dünner Schichten (Interferenzschicht-Systeme) generiert werden.

Auf diese Weise bilden das optisch variable Element und das elektronische Bauelement und/oder der elektronische Schaltkreis eine untrennbare Einheit. Die Manipulation an dem optisch variablen Element oder dem elektronischen Bauelement verändert beide Komponenten und führt zur Zerstörung einer oder beider Komponenten.

Beispielsweise können RFID-Transponder mit Informationsspeichern versehen sein, die durch Laser-Ablation beschrieben werden können. Bei diesem Verfahren werden nicht benötigte Bauelemente der Speichermatrix durch Lasereinwirkung zerstört. Eine solche Speichermatrix kann als Folienkörper mit organischen Bauelementen, wie organischen Feldeffekttransistoren ausgebildet sein. Jede Manipulation an der Speichermatrix führt nun bei Anwendung der erfindungsgemäßen Lösung zu einer Veränderung der optischen Eigenschaften der manipulierten elektrisch aktiven Schicht der Speichermatrix und wird auf diese Weise sichtbar.

Elektronische Bauelemente können mit der erfindungsgemäßen Lösung in das optisch variable Element so integriert werden, daß ein getrenntes, d.h. nachträgliches Aufbringen des optisch variablen Elements auf das elektronische Bauelement auf Grund der fertigungstechnischen Toleranz schwierig ist. Die elektronischen Bauelemente sind in die optische Wirkung einbezogen und müssen deshalb mit Toleranzen im µm-Bereich zum optisch variablen Element positioniert sein. Das ist mit vertretbarem Aufwand nur in einem gemeinsamen Herstellungsprozeß möglich.

Weitere vorteilhafte Ausgestaltungen der Erfindung sind in den Unteransprüchen bezeichnet.

Die Arten der elektronischen Bauelemente, deren elektrisch aktive Schichten als optisch variables Element ausgebildet sein können, sindvielfältig.

Es kann vorgesehen sein, daß die elektrisch aktive Schicht als RF-Antenne eines RFID-Transponders ausgebildet ist. Eine solche Antennenstruktur kann auf diese Weise auch optisch aufgewertet sein. Eine spiralförmig ausgebildete RF-Antenne kann auf diese Weise eine bildliche Darstellung bilden oder Teil einer solchen Darstellung sein. Durch die Mikrostrukturierung der elektrisch aktiven Schicht kann eine solche RF-Antenne darüber hinaus bessere elektrische Eigenschaften haben als eine herkömmliche, als Dünnschicht mit ebener Oberfläche ausgebildete RF-Antenne.

Die elektrisch aktive Schicht kann als elektrisch aktive Schicht einer Induktivität und/oder einer Kapazität ausgebildet sein. Insbesondere, wenn die elektrisch aktive Schicht als elektrisch aktive Schicht eines elektrischer Schwingkreises ausgebildet ist, d.h. als eine Zusammenschaltung aus Induktivität und Kapazität, kann die erfindungsgemäß vorgesehene Mikrostrukturierung der Oberfläche der elektrisch aktiven Schicht die Resonanzfrequenz des auf diese Weise gebildeten elektrischen Schwingkreises signifikant beeinflussen. Es ist dann nicht mehr möglich, die Resonanzfrequenz des Schwingkreises nur aus den makro-geometrischen Abmessungen der elektrisch aktiven Schicht bzw. Schichten zu bestimmen. Eine solche spezielle Eigenschaft des Schwingkreises kann die Fälschungssicherheit weiter erhöhen.

Es ist vorgesehen, daß die elektrisch aktive Schicht als eine Elektrode eines optischen Anzeigeelements ausgebildet ist. Es kann sich dabei um ein optisches Anzeigeelement handeln, das durch einen RFID-Transponder aktiviert wird. Das optische Anzeigeelement kann bei der Aktivierung einen zusätzlichen optischen Effekt erzeugen, der dem von seiner als optisch variables Element ausgebildeten Elektrode bzw. Elektroden ausgebildeten optischen Effekt überlagert ist. Bei dem optischen Anzeigeelement kann es sich beispielsweise um eine organische Leuchtdiode handeln, die in Form eines Musters oder einer Zahl ausgeformt ist. Dieses Muster bzw. diese Zahl bildet nun zusammen mit dem durch die Elektrode hervorgerufenen optisch variablen Hintergrundmuster einen besonderen optischen Effekt aus. Es kann aber auch vorgesehen sein, punktförmige organische Leuchtdioden in einem Bildpunktraster anzuordnen, wie es beispielsweise von Flachbildschirmen bekannt ist. Auf diese Weise können bildliche Darstellungen mit hoher Auflösung erzeugt werden. Weiter ist es möglich, daß das optische Anzeigeelement elektrochrome Elemente aufweist, die abhängig von der anliegenden elektrischen Spannung unterschiedliche Farben zeigen. Es ist auch möglich, daß das optische Anzeigeelement eine Vielzahl von unterschiedlich gefärbten bzw. schwarz-weißen und unterschiedlich geladenen Teilchen aufweist, die beweglich zwischen zwei Elektrodenschichten angeordnet sind. Durch Anlegen einer Spannung zwischen den Elektrodenschichten läßt sich die Konzentration der einen oder der anderen Teilchen in der Nähe der einen oder der anderen Elektrodenschicht verändern, so daß sich der optische Eindruck des Anzeigeelements abhängig vom Betrag und/oder von der Polarität der anliegenden Spannung ändert. Der so eingestellte Zustand ist im wesentlichen solange unverändert, bis eine neue Spannung angelegt wird. Es kann auch vorgesehen sein, das optische Anzeigeelement zu individualisieren, beispielsweise in Form einer Serien-Nummer, eines Bildes oder eines Namens. Das kann beispielsweise durch die Mikrostrukturierung der Oberfläche der Elektrodenschicht während des Herstellungsprozesses geschehen, beispielsweise durch Mikro-Demetallisierung oder Mikro-Metallisierung einer metallischen Elektrodenschicht.

Die elektrisch aktive Schicht kann auch als ein elektrisches Verbindungselement ausgebildet sein. Es ist also auch möglich, das Leitungslayout von Schaltungen bzw. Schaltkreisen als optisch variables Element auszubilden. So können beispielsweise großflächige, mit dem Massepotential der Schaltung bzw. des Schaltkreises verbundene Leiterbahnen in die optische Gestaltung einbezogen sein. Weitere Bereiche ohne elektrische Funktion können zwischen den elektrischen Funktionselementen angeordnet sein, um den optischen Eindruck zu verbessern.

Die elektrisch aktive Schicht kann als metallische Schicht ausgebildet sein. Metallische Schichten können als strukturierte Schichten aufgedruckt werden, beispielsweise als beidseitiger Aufdruck auf eine Polymerschicht zur Ausbildung eines organischen optischen Anzeigeelements. Sie können aber auch flächig aufgebracht werden, beispielsweise durch Sputtern und anschließend durch ein Abtragungsverfahren strukturiert werden. Anschließend kann die Mikrostrukturierung der Oberfläche der metallischen Schicht beispielsweise durch eine Profilwalze aufgebracht werden. Es kann aber auch vorgesehen sein, die unter der metallischen Schicht angeordnete Schicht zu profilieren und darauf die metallische Schicht aufzubringen. Die metallische Schicht kann abhängig von der Schichtdicke undurchsichtig, halbtransparent oder transparent ausgebildet sein.

Wie weiter oben beschrieben, kann die elektrisch aktive Schicht auch als mikro-demetallisierte Schicht ausgebildet sein, die auf diese Weise den Blick auf darunter angeordnete Schichten freigeben kann.

Die elektrisch aktive Schicht kann auch als nichtmetallische Schicht ausgebildet sein, beispielsweise aus Indium-Zinn-Oxid ausgebildet. Eine Schicht aus Indium-Zinn-Oxid kann vorgesehen sein, wenn die elektrisch aktive Schicht transparent ausgebildet sein soll.

Es kann auch vorgesehen sein, die elektrisch leitende Schicht als organische Schicht auszubilden. Das kann besonders vorteilhaft zur Ausbildung organischer elektronischer Bauelemente sein, wie es organische Feldeffekttransistoren sind, aus denen beispielsweise organische Schaltkreise gebildet sind.

Weiter kann vorgesehen sein, daß die elektrisch aktive Schicht von mindestens einer Deckschicht überdeckt ist. Bei einer solchen Schicht kann es sich um eine Schutzschicht handeln, beispielsweise um organische elektronische Bauelemente vor Umwelteinflüssen zu schützen. Es kann aber auch vorgesehen sein, daß die Deckschicht als transparente diffraktive Struktur ausgebildet ist. Eine solche Deckschicht kann einen optischen Effekt ausbilden, der dem optischen Effekt, der durch die als optisch variables Element ausgebildete elektrisch aktive Schicht hervorgerufen ist, überlagert ist. Es kann sich aber auch um einander ergänzende Effekte handeln, beispielsweise um die Generierung von Teilbildern, die zusammen betrachtet einen Bildwechsel hervorrufen, der eine Bewegung simuliert.

Die Deckschicht kann auch als Makrostruktur ausgebildet sein, beispielsweise als Mikrolinsen-Feld und/oder als Mikroprismen-Feld. Eine solche Deckschicht kann zusätzliche optische Effekte hervorrufen. Solche Makrostrukturen sind hier insbesondere Strukturen, deren laterale Abmessungen im 100 µm-Bereich oder kleiner liegen. Ein Mikrolinsen-Feld, insbesondere ein aus Sammellinsen gebildetes Mikrolinsen-Feld, kann Umgebungslicht auf das optische Anzeigeelement bündeln. Auf diese Weise kann die optische Wirkung von Anzeigeelementen nach dem Prinzip elektrochromer Elemente, dazu zählen auch OLEDs (organische Lichtemitterdioden), oder mit beweglichen Farbpartikeln ausgebildeter Elemente verbessert werden. Es kann aber auch vorgesehen sein, daß das Mikrolinsen-Feld durch Überlagerung mit einem zweiten Mikrolinsenfeld wie eine makroskopische Sammellinse wirkt, d.h. die unter dem Mikrolinsen-Feld angeordneten Bildelemente vergrößert wiedergibt. Weiter kann vorgesehen sein, daß über das erste Mikrolinsen-Feld ein zweites Mikrolinsen-Feld gebracht werden kann, beispielsweise durch Faltung eines mit solchen Sicherheitselementen ausgestatteten Sicherheitsdokuments. Auf diese Weise können Linsenanordnungen gebildet werden, die von Fernrohren oder Mikroskopen bekannt sind. So kann beispielsweise durch Kombination von aus Mikrolinsen-Feldern gebildeten Sammellinsen und Zerstreuungslinsen ein sog. Galileisches Fernrohr ausgebildet sein, wie es von Operngläsern bekannt ist.

Mit Mikroprismen-Feldern kann beispielsweise das aus optischen Anzeigeelementen austretende Licht gezielt verteilt werden. Das ausgestrahlte Licht kann beispielsweise so abgelenkt werden, so daß es auch bei schrägem Betrachtungswinkel gut wahrgenommen wird.
Es kann auch vorgesehen sein, daß die im vorhergehenden so genannte Deckschicht unter dem optischen Anzeigeelement angeordnet ist. Eine solche Deckschicht kann beispielsweise als ein sinusförmiges oder sinusähnliches Linear- oder Kreuzgitter mit Linienzahlen im Bereich von ca. 200- 2000 Linien/mm ausgebildet sein. Wenn das optische Anzeigeelement als LED ausgebildet ist, kann so das an der Unterseite des optischen Anzeigeelements austretende Licht reflektiert werden. Es kann dazu auch eine reflektierende Fresnellinse vorgesehen sein.

Die erfindungsgemäße Lösung schließt ein, daß das optisch variable Element nur in einem Teilbereich als elektrisch aktive Schicht ausgebildet ist. Wenn das optisch variable Element beispielsweise ein optisches Anzeigeelement überdeckt, ist nur der Teil des optisch variablen Elements als elektrisch aktive Schicht ausgebildet, der über dem Anzeigeelement angeordnet ist. Es kann sich bei den elektrisch aktiven Schichten auch um Elektroden anderer elektronischer Bauelemente und/oder Induktivitäten und/oder Kapazitäten und/oder Leiterbahnen handeln.

Im Folgenden wird die Erfindung anhand von mehreren Ausführungsbeispielen unter Zuhilfenahme der beiliegenden Zeichnungen beispielhaft verdeutlicht.
Es zeigen:
- Fig. 1: Eine schematische Querschnittsansicht eines ersten Ausführungsbeispiels eines Polymer-Anzeigeelements mit als optisch variables Element ausgebildeter elektrisch aktiver Schicht;
- Fig. 2: eine schematische Querschnittsansicht eines zweiten Ausführungsbeispiels eines Polymer-Anzeigeelements;
- Fig. 3: eine schematische Querschnittsansicht eines dritten Ausführungsbeispiels eines Polymer-Anzeigeelements;
- Fig. 4: eine schematische Querschnittsansicht eines vierten Ausführungsbeispiels eines Polymer-Anzeigeelements;
- Fig. 5: eine schematische Querschnittsansicht eines fünften Ausführungsbeispiels eines Polymer-Anzeigeelements;
- Fig. 6: eine schematische Querschnittsansicht eines sechsten Ausführungsbeispiels eines Polymer-Anzeigeelements;
- Fig. 7: ein schematische Querschnittsansicht eines ersten Ausführungsbeispiels eines Sicherheitsdokuments mit als optisch variables Element ausgebildeter elektrisch aktiver Schicht;
- Fig. 8: eine Draufsicht VIII des Sicherheitsdokuments in Fig. 7;
- Fig. 9: ein Ausführungsbeispiel eines Polymer-Displays mit als optisch variables Element ausgebildeter elektrisch aktiver Schicht in schematischer Draufsicht;
- Fig. 10: einen vergrößerten Ausschnitt X aus Fig. 9;
- Fig. 11: einen weiter vergrößerten Ausschnitt Xl aus Fig. 10;
- Fig. 12: eine schematische Ansicht eines zweiten Ausführungsbeispiels eines Sicherheitsdokuments;
- Fig. 13: einen vergrößerten Ausschnitt XIII aus Fig. 12;
- Fig. 14: einen vergrößerten Ausschnitt XIV aus Fig. 13;
- Fig. 15: einen vergrößerten Ausschnitt XV aus Fig. 14.

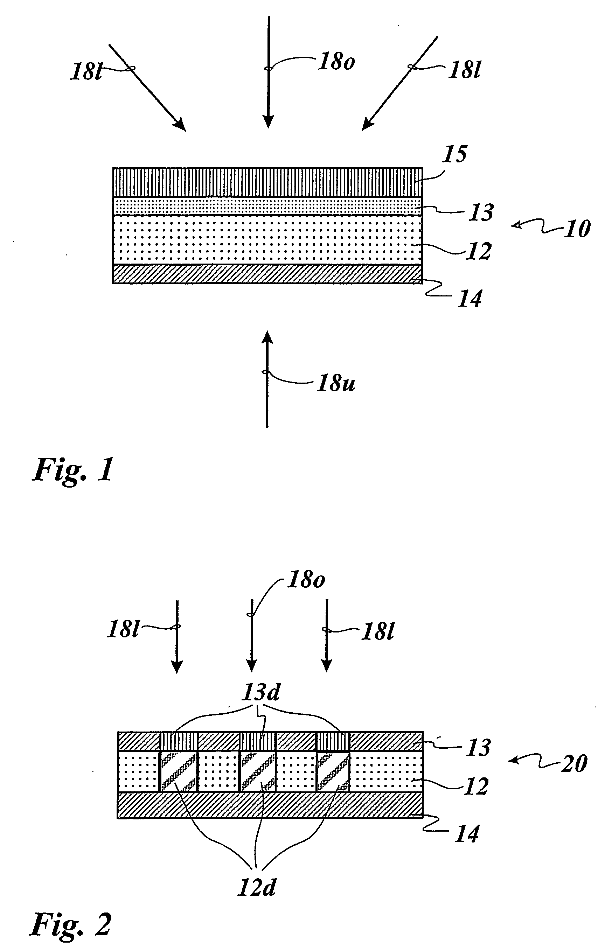

Fig. 1 zeigt in schematischer Schnittdarstellung ein erstes Ausführungsbeispiel eines Polymer-Anzeigeelements 10 aus einer Polymerdisplayschicht 12, einer darauf angeordneten oberen Elektrodenschicht 13 und einer darunter angeordneten unteren Elektrodenschicht 14. Die obere Elektrodenschicht 13 kann als transparente metallische Schicht mit einer Dicke von 10 nm ausgebildet sein, die untere Elektrodenschicht 14 als opake metallische Schicht mit einer Dicke von 10 nm.

Die Polymerdisplayschicht 12 ist beispielsweise aus einem lichtemittierenden Polymer, einer elektrochromen oder einer elektronischen Tinte ausgebildet. Dabei kann bei Ausbildung der Polymerdisplayschicht 12 als OLED (organische Lichtemitterdiode) vorgesehen sein, daß sie aus drei übereinander angeordneten Teilschichten von 200 bis 300 nm Dicke, 20nm Dicke und 200 bis 300 nm Dicke gebildet ist.

Die untere Elektrodenschicht 14 ist als voll metallisierte Schicht ausgebildet, in die eine optisch aktive Oberflächenstruktur abgeformt ist. Die untere Elektrodenschicht 14 bildet so ein voll metallisiertes OVD (optisch variables Element, beispielsweise ein Beugungsgitter oder ein Hologramm) und besteht beispielsweise aus Kupfer, Aluminium, Silber, Gold oder Chrom. Die obere Elektrodenschicht 13 besteht aus einer transparenten leitenden Schicht, beispielsweise aus einem leitfähigen Oxid wie Indium-Zinn-Oxid oder auch aus einem sehr feinen Metallgitter.

Auf diese Weise ist bei einer Blickrichtung 18o von oben die Polymerdisplayschicht 12 sichtbar und bei einer Blickrichtung 18u von unten unsichtbar. Umgebungslicht 18I trifft auf das Polymer-Anzeigeelement 10 im wesentlichen von oben auf.

Es kann vorgesehen sein, auf die obere Elektrodenschicht 13 ein transparentes OVD 15 aufzubringen. Das transparente OVD 15 kann als dielektrische Schicht mit einem hochbrechenden Material, wie z.B. TiO₂ oder ZnS, ausgebildet sein. Dabei kann vorgesehen sein, daß das transparente OVD 15 sich auch über mindestens einen an das Polymer-Anzeigeelement 10 angrenzenden Bereich erstreckt.

Die vorgenannten Schichten können so ausgebildet sein, daß sie optische Effekte erzeugen, die ein Sicherheitsmerkmal und/oder einen dekorativen Effekt bilden. Weiter können Effekte durch das Zusammenwirken zweier Schichten ausgebildet sein, beispielsweise als Moire-Effekt, oder es können Merkmale aus der registrierten Zuordnung der Schichten ausgebildet sein, die die Fälschungssicherheit erhöhen.

Fig. 2 zeigt nun ein zweites Ausführungsbeispiel eines Polymer-Anzeigeelements 20. Zur besseren Veranschaulichung sind gleichartige Schichten mit gleichen Bezugszeichen bezeichnet. Das Polymer-Anzeigeelement 20 ist nunmehr aus drei übereinander angeordneten Schichten gebildet. Auf der unteren Elektrodenschicht 14, die als voll metallisiertes OVD ausgebildet sein kann, ist die Polymerdisplayschicht 12 angeordnet und auf dieser die obere Elektrodenschicht 13. Die obere Elektrodenschicht 13 ist in diesem Ausführungsbeispiel als metallische Elektrodenschicht 13 mit transparenten mikro-demetallisierten Bereichen 13d ausgebildet. Es kann auch vorgesehen sein, die Bereiche 13d als mikro-metallisierte Bereiche auszubilden, die sich beispielsweise in der Dicke von der metallischen Elektrodenschicht 13 unterscheiden. Die mikro-demetallisierten Bereichen 13d korrespondieren mit Anzeigebereichen 12d eines Luminiszenz-Displays, die in die Polymerdisplayschicht 12 eingebettet sind. Die Anzeigebereiche 12d können vorzugsweise lichtemittierend und/oder farbwechselnd als Bildpunkte ausgebildet sein und so eine optische Information wiedergeben, beispielsweise einen Schriftzug oder ein Logo. Es kann vorgesehen sein, die Anzeigebereiche 12d statisch anzusteuern, so daß sie eine unveränderliche Information wiedergeben. Es kann aber auch vorgesehen sein, die Anzeigebereiche 12d dynamisch anzusteuern, so daß sie eine veränderliche Information ausgeben, beispielsweise einen pulsierenden Farbwechsel. Eine solche veränderliche Information kann beispielsweise ausgegeben werden, wenn das Polymer-Anzeigeelemet 20 in einen RFID-Transponder (RFID = Radio Frequency Identifikation) integriert ist. Ein RFID-Transponder strahlt ein (moduliertes) Hochfrequenzsignal ab, wenn er sich in einem auf ihn abgestimmten elektromagnetischen Hochfrequenz-Feld befindet. Dieser Vorgang kann auf diese Weise zusätzlich optisch signalisiert werden.

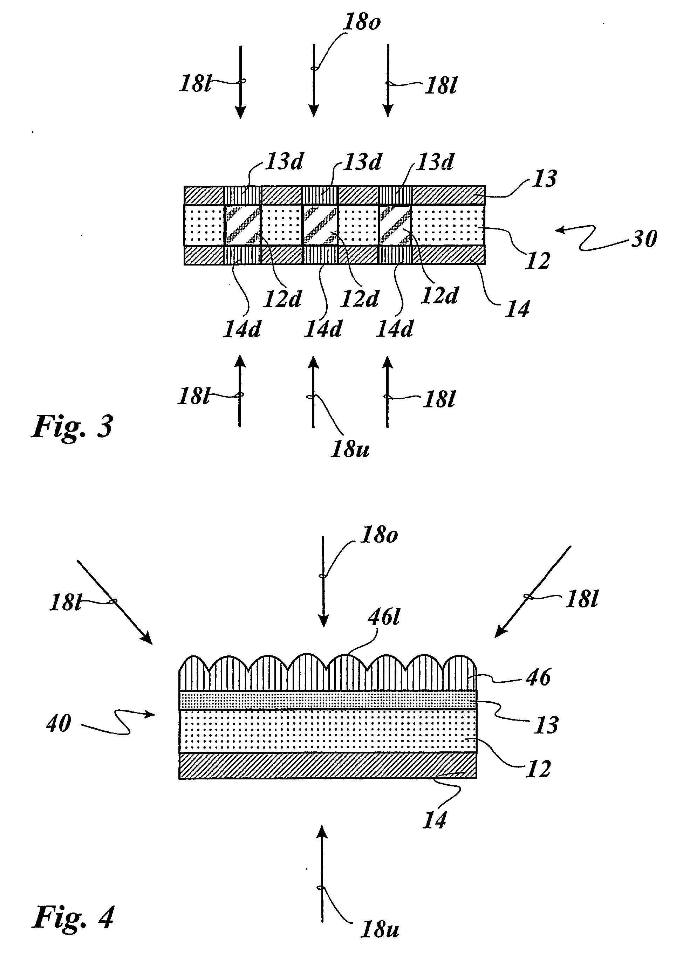

Es kann sich bei den Anzeigebereichen 12d aber auch um von der übrigen Polymerdisplayschicht 12 nicht getrennte Bereiche handeln, die durch Lichteinfall durch die obere mikrostrukturierte Elektrodenschicht 13 gebildet sind und dabei luminiszieren. Eine solche Ausbildung kann auch bei den Ausführungsbeispielen in Fig. 3, 5 und 6 vorgesehen sein.

Die obere Elektrodenschicht 13 kann eine mikrostrukturierte Oberfläche aufweisen, beispielsweise als Hologramm ausgebildet. Auf diese Weise kann die durch die Anzeigebereiche 12d wiedergegebene Information in das holographische Bild eingebettet sein.

Fig. 3 zeigt nun ein Polymer-Anzeigeelement 30, welches wie das in Fig. 2 dargestellte Polymer-Anzeigeelement 20 aus drei übereinander angeordneten Schichten 14, 12 und 13 gebildet ist. In die Polymerdisplayschicht 12 sind die Anzeigebereiche 12d eines Luminiszenz-Displays eingebettet. In dem dargestellten Ausführungsbeispiel weisen sowohl die obere Elektrodenschicht 13 als auch die untere Elektrodenschicht 14 mikro-demetallisierte Bereiche 13d und 14 d auf, die korrespondierend zu den Anzeigebereichen 12d angeordnet sind. Auf diese Weise können die übereinander angeordneten Bereiche 14d, 12d und 13d ein Muster ausbilden, das bei der Blickrichtung 18u von unten spiegelbildlich ausgebildet ist zu dem bei der Blickrichtung 18o von oben sichtbaren Muster. Es kann aber auch vorgesehen sein, daß die Bereiche 13d und 14d unterschiedliche Muster ausbilden, beispielsweise zueinander komplementäre Muster. Die Muster können beispielsweise als Logos oder Folgen alphanumerischer Symbole ausgebildet sein.

Es kann beispielsweise ein vollständig komplementäres Bild erzeugt werden, indem vorgesehen ist:
- die Bereiche 13d sind als transparente metallisierte Bereiche und die umgebenden Bereiche 13 sind als opake metallisierte Bereiche ausgebildet,
- die Bereiche 14d sind als opake metallisierte Bereiche und die umgebenden Bereiche 14 sind als transparente metallisierte Bereiche ausgebildet.

Eine solche Ausbildung ist herstellbar durch Beschichtung beider Seiten der Polymerdisplayschicht 12 mit Metall, Demetallisierung der Bereiche 13d und 14 im Register bei Verwendung komplementärer Muster und Beschichtung beider Seiten mit einer transparenten Metallschicht.

Bei komplementärer Anordnung kann vorgesehen sein, daß die von oben (Blickrichtung 180) und von unten (Blickrichtung 18u) sichtbaren Teilmuster durch rasches Schwenken des Polymer-Anzeigelements den optischen Eindruck eines aus zwei Teilmustern gebildeten Gesamtmusters erzeugen. Ein solches Gesamtmuster kann beispielsweise als ein durch einen Schriftzug ergänztes bildliches Logo ausgebildet sein. Es kann auch vorgesehen sein, die Bereiche 13d und 14d als interaktive Muster auszubilden, beispielsweise durch pulsierendes Aufleuchten der Anzeigebereiche 12d.

Die obere Elektrodenschicht 13 und/oder die untere Elektrodenschicht 14 und/oder die mikro-demetallisierten Bereiche 13d, 14d können als diffraktive Schichten ausgebildet sein, beispielsweise als Hologramm oder als Beugungsgitter. Auf diese Weise können unterschiedliche optische Effekte ausgebildet sein, die neben der vorteilhaften optischen Wirkung ein fälschungssicheres Sicherheitsmerkmal beinhalten können.

Fig. 4 zeigt nun ein Polymer-Anzeigeelement 40, das mit einer transparenten mikro-optischen Schicht 46 abgedeckt ist. In dem dargestellten Ausführungsbeispiel handelt es sich hierbei um eine als Mikrolinsen-Feld ausgebildete Makrostruktur, wobei die Mikrolinsen Abmessungen im 100 µm-Bereich haben und jeweils als Sammellinsen ausgebildet sind. Weiter ist die untere Elektrodenschicht 14 als nicht transparente metallische Schicht ausgebildet und die obere Elektrodenschicht 13 als transparente leitfähige Schicht ausgebildet.

In dem in Fig. 4 dargestellten Ausführungsbeispiel konzentriert die transparente mikro-optische Schicht 46 das Umgebungslicht 18I auf die zwischen den Elektrodenschichten 13, 14 angeordnete Polymerdisplayschicht 12. Beispielsweise kann so ein Farbwechsel der Polymerdisplayschicht 12 besonders gut sichtbar gemacht werden. Dabei kann eine OLED-Konfiguration wie weiter oben in Fig. 1 beschrieben vorgesehen sein, bei der die aktive Schicht sehr dünn (ca. 10 nm) ausgebildet ist. Diese Schicht kann deshalb im Brennpunkt oder sehr nahe am Brennpunkt der Mikrolinsen der mikro-optischen Schicht 46 angeordnet sein.

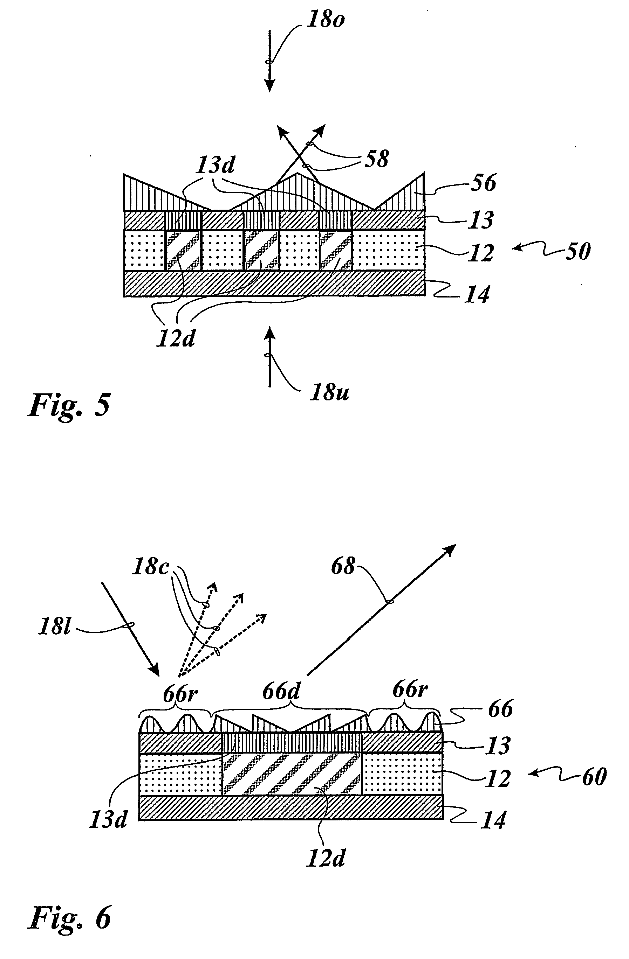

Fig. 5 zeigt ein Polymer-Anzeigeelement 50, das mit einer diffraktiven OVD-Schicht 56 überzogen ist. Das Polymer-Anzeigeelement 50 ist im übrigen wie das in Fig. 2 dargestellte Polymer-Anzeigeelement 20 ausgebildet, d.h. auf der unteren Elektrodenschicht 14, die als voll metallisiertes OVD ausgebildet ist, ist die Polymerdisplayschicht 12 angeordnet und auf dieser ist die obere Elektrodenschicht 13 als metallische Schicht mit transparenten mikro-demetallisierten Bereichen 13d angeordnet. Die mikro-demetallisierten Bereichen 13d korrespondieren mit Anzeigebereichen 12d eines Luminiszenz-Displays, die in die Polymerdisplayschicht 12 eingebettet sind.

Die diffraktive OVD-Schicht 56 erzeugt ein "Wasserzeichen" auf dem Polymer-Anzeigeeelement 50 und bildet auf diese Weise ein besonderes Merkmal aus, das nur mit hohem Aufwand nachahmbar ist. Es kann sich dabei um ein Designelement handeln, das in einer ersten Betrachtungsrichtung aufleuchtet, während die Umgebung des Designelements bei einer zweiten Betrachtungsrichtung aufleuchtet, die gegenüber der ersten Betrachtungsrichtung um 180° gedreht ist. Die in Fig. 5 dargestellten Pfeile 58 symbolisieren die durch die diffraktive OVD-Schicht 56 abgelenkten optischen Strahlen der Anzeigebereiche 12d des Luminiszenz-Displays.

Fig. 6 zeigt nun ein Polymer-Anzeigeelement 60, das prinzipiell wie das in Fig. 5 dargestellte Polymer-Anzeigeelement 50 ausgebildet ist. Eine diffraktive OVD-Schicht 66 überzieht als oberste Schicht das Polymer-Anzeigeelement 60. Die OVD-Schicht 66 ist mit reflexiven Bereichen 66r und mit diffraktiven Bereichen 66d ausgebildet.

Die reflexiven Bereiche 66r reflektieren das einfallende Umgebungslicht 181 und zerlegen es dabei in spektralfarbiges Licht 18c. Auf diese Weise wird ein Farbeffekt erzeugt, der sowohl von der Zusammensetzung als auch vom Einfallswinkel des Umgebungslichtes 18I abhängig ist. Ein solcher physikalischer Farbeffekt kann durch ein Farbkopierverfahren nicht nachgeahmt werden.

Die diffraktiven Bereiche 66d sind in dem in Fig. 6 dargestellten Ausführungsbeispiel über dem Anzeigebereich 12d des Luminiszenz-Displays angeordnet und erzeugen auf diese Weise ein "Wasserzeichen", das wie weiter oben beschrieben, ein zusätzliches fälschungssicheres Sicherheitsmerkmal sein kann.

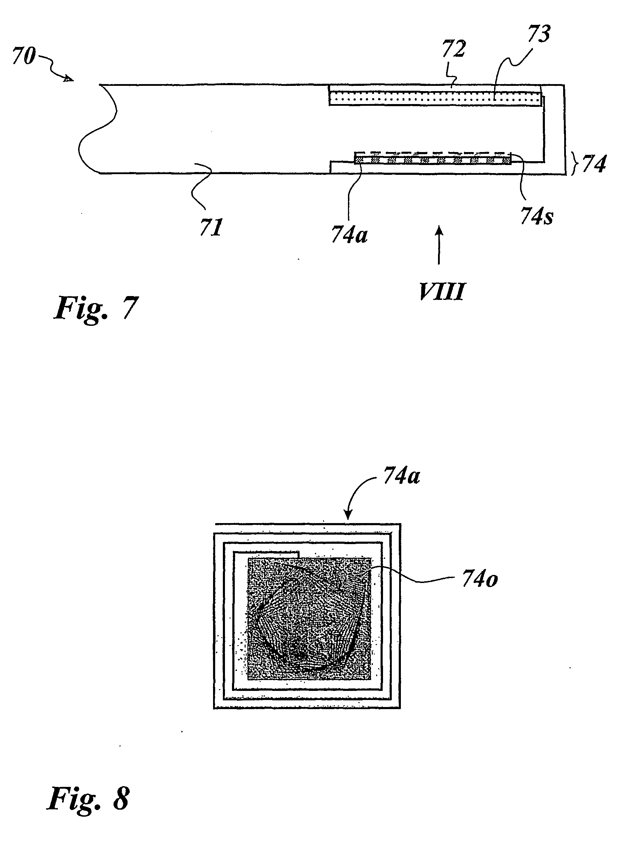

Fig. 7 zeigt nun in einer schematischen Schnittansicht ein erstes Ausführungsbeispiel eines Sicherheitsdokuments 70, das mit den erfindungsgemäßen Anzeigeelementen versehen ist. Bei dem Sicherheitsdokument 70 kann es sich um eine Banknote, ein Dokument, ein Warenetikett oder dergleichen handeln. Das Sicherheitsdokument 70 besteht aus einem Träger 71 aus einem Papiermaterial, das etwa eine Dicke von 100 µm besitzt. Der Träger kann auch aus Plastik ausgebildet sein, wie das beispielsweise bei Ausweiskarten üblich ist.

Der Träger 71 ist auf seiner Oberseite mit einem optisch variablen Element 72 versehen, unter dem ein Polymer-Anzeigeelement 73 angeordnet ist. Dabei kann es sich um ein Anzeigeelement handeln, wie es vorstehend in den Fig. 1 bis 6 beschrieben ist, d.h. das optisch variable Element 72 und das Polymer-Anzeigeelement 73 können ein Folienelement bilden. Das optisch variable Element 72 kann als ein diffraktives Sicherheitselement ausgebildet sein, beispielsweise als Hologramm oder Kinegram®.

Auf der Unterseite des Trägers 71 ist ein RFID-Transponder 74 angeordnet, gebildet aus einer Antenne 74a und einem elektronischen Schaltkreis 74s. Der RFID-Transponder 71 stellt u.a. die Versorgungsspannung für das Polymer-Anzeigeelement 73 bereit. Wie in der Detailansicht von unten in Fig. 8 zu erkennen, ist die spiralförmig angeordnete Antenne 74a zumindest in einem Teilbereich auch als optisch variables Element 74o ausgebildet und bildet auf diese Weise ein zusätzliches fälschungssicheres Sicherheitsmerkmal aus. Es kann auch vorgesehen sein, weitere Schichten über der Antenne 74a anzuordnen, die einen Farbwechsel ausbilden, wenn der RFID-Transponder 74 durch ein elektromagnetisches Hochfrequenzfeld aktiviert ist. Es kann also vorgesehen sein, daß im nichtaktivierten Zustand ein farbliches Merkmal sichtbar ist, das im aktivierten Zustand heller erscheint oder umgekehrt.

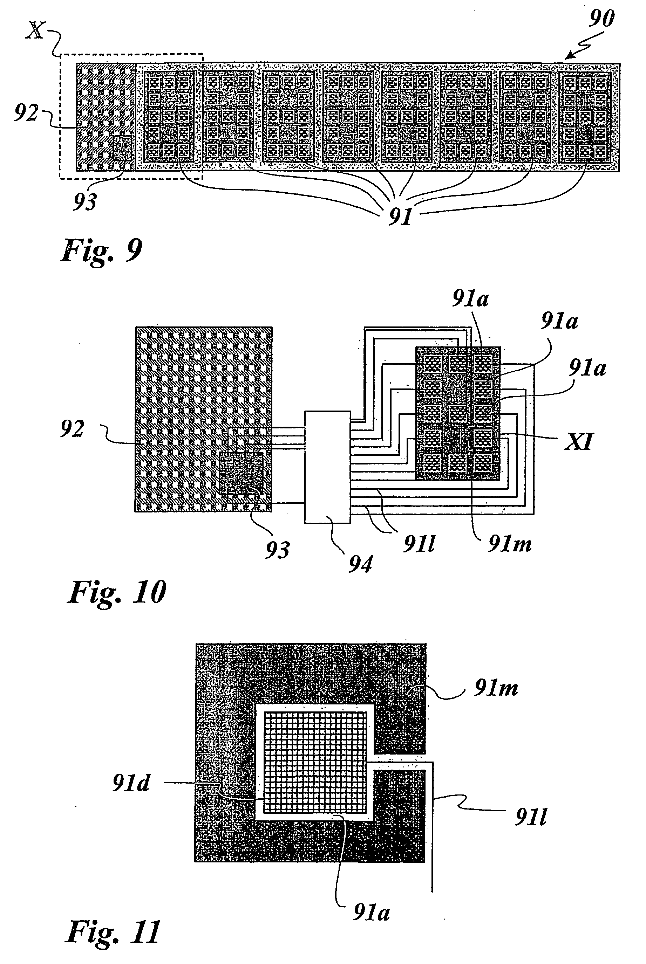

Die Fig. 9 bis 11 zeigen nun ein Polymer-Display 90 mit acht alphanumerischen Anzeige-Elementen 91, die von einer Antennen-Struktur 92 und einen integrierten Schaltkreis 93 mit elektrischer Energie versorgt werden. Die alphanumerischen Anzeige-Elemente 91 sind im dargestellten Ausführungsbeispiel aus jeweils 13 Einzel-Anzeige-Elementen 91a gebildet, die mit einem Logik-Schaltsystem 94 verbunden sind. Auf diese Weise wird die durch die Antennen-Struktur 92 und den integrierten Schaltkreis 93 bereitgestellte elektrische Energie so auf die Einzel-Anzeige-Elemente 91 a verteilt, daß die angesteuerten Einzel-Anzeige-Elemente 91 a eines Anzeige-Elements 91 jeweils ein alphanumerisches Zeichen bilden. Die von den acht alphanumerischen Anzeige-Elementen 91 gebildeten Zeichen können beispielsweise eine personalisierte Information wiedergeben, wie eine Seriennummer oder einen Namen.

Die Antennen-Struktur 92 und der integrierte Schaltkreis 93 können einen RFID-Transponder bilden, wobei der integrierte Schaltkreis 93 die logische Information zur Ansteuerung des Logik-Schaltsystems 94 bereitstellen kann.

Die Antennen-Struktur 92 kann als diffraktives optisch variables Element ausgebildet sein, d.h. in die Oberfläche der Antennen-Struktur 92 kann ein diffraktives Muster abgeformt sein. Auf diese Weise kann nicht nur ein schwer nachahmbares Sicherheitsmerkmal bereitgestellt sein, sondern auch eine Funktionsverbesserung der Antennen-Struktur 92 erreicht sein. Durch die eingeprägte Oberflächenstruktur ist nämlich die wirksame Oberfläche der Antennen-Struktur bedeutend vergrößert, wodurch die elektrische Güte der Antennen-Struktur 92 verbessert ist.

Es kann vorgesehen sein, daß der integrierte Schaltkreis 93 mit einer Folienschicht mit diffraktiver Struktur überzogen ist, die ein optisch variables Element bildet. Dabei kann der in die Antennen-Struktur 92 eingebettete Schaltkreis 93 mit einer solchen Oberflächenstruktur ausgebildet sein, daß er optisch nicht wahrnehmbar ist. Es kann aber auch vorgesehen sein, daß er sich von der Antennen-Struktur 92 optisch abhebt und zusammen mit dieser einen optisch interessanten Effekt ausbildet, beispielsweise als ein Logo vor einem Hologramm oder Kinegram®.

Wie in Fig. 10 und weiter in Fig. 11 zu erkennen ist, sind die alphanumerischen Anzeige-Elemente 91 aus Einzel-Anzeige-Elementen 91a ausgebildet, deren obere Elektrode jeweils mit einem elektrischen Leitungszug 911 mit dem Logik-Schaltsystem 94 verbunden ist. Dabei kann ein Anzeige-Element 91 wie das weiter oben in Fig. 2 im Schnitt schematisch dargestellte Anzeige-Element ausgebildet sein, d.h. die Einzel-Anzeige-Elemente 91 a sind mit mikro-demetallisierten Bereichen 91 d oder mit einer lateral strukturierten transparenten Elektrode ausgebildet, die den Blick auf die darunter angeordnete Polymerdisplayschicht freigeben. Die Einzel-Anzeige-Elemente 91a sind von einer metallischen Elektrodenschicht 91m umgeben. In dem in Fig. 9 dargestellten Ausführungsbeispiel sind die Elektrodenschichten 91 m der Anzeige-Elemente 91 voneinander abgegrenzt. Es kann aber auch vorgesehen sein, daß sie einen gemeinsamen geschlossenen Bereich bilden. Die Elektrodenschichten 91 m können mit einer diffraktiven Oberflächenstruktur ausgebildet sein, die ein optisch variables Element bildet, beispielsweise ein Beugungsgitter zur Ausbildung von Farbeffekten, die von dem Betrachtungswinkel und der spektralen Zusammensetzung des Umgebungslichtes abhängig sind.

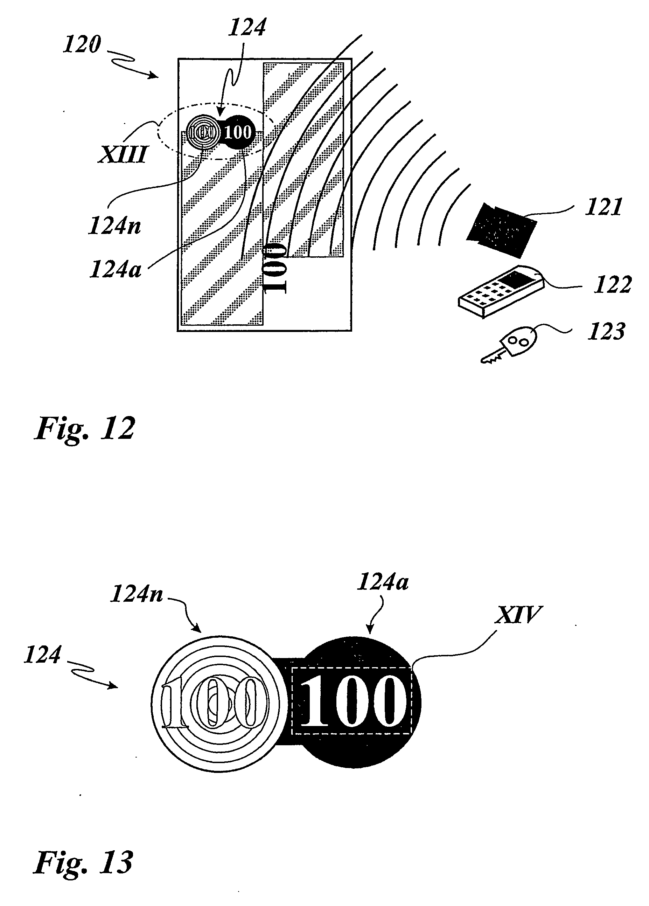

Die Fig. 12 bis 15 zeigen nun ein weiteres Ausführungsbeispiels eines Sicherheitsdokuments mit den erfindungsgemäßen Anzeigeelementen.

Die Echtheit eines Sicherheitsdokument 120 kann in diesem Beispiel durch einen speziellen Hochfrequenzsender 121, ein Funktelefon 122 oder einen Funkschlüssel 123 geprüft werden. Dazu ist auf dem Sicherheitsdokument 120 ein nicht dargestellter RFID-Transponder angeordnet, der als Folienelement ausgebildet sein kann. Ein solches Folienelement kann beispielsweise unter einem Werteindruck 124 verborgen sein. In dem dargestellten Ausführungsbeispiel ist ein nichtaktivierbarer Werteindruck 124n neben einem aktivierbaren Werteindruck 124a angeordnet.

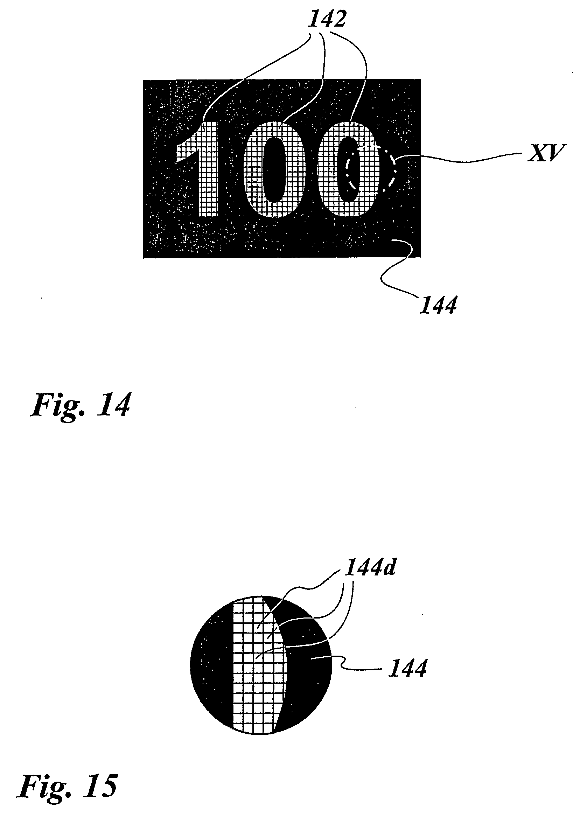

Der aktivierbare Werteindruck 124a ist, wie in Fig. 14 und 15 besonders gut zu sehen, als ein Polymer-Anzeigeelement ausgebildet. Die Ziffern 142 sind aus gitterförmig angeordneten mikro-demetallisierten oder mikro-metallisierten Bereichen 144d (s. Fig. 15) gebildet, die den Blick freigeben auf korrespondierend darunter angeordnete Anzeigebereiche, die wie weiter oben in Fig. 2 beschrieben, lichtemittierend und/oder farbwechselnd ausgebildet sein können. Es kann sich dabei auch um einen zusammenhängenden flächigen Anzeigebereich handeln. Die Bereiche 144d sind in einer metallischen Elektrodenschicht 144 angeordnet, die beispielsweise spiegelnd ausgebildet sein kann. Es kann aber auch vorgesehen sein, daß die Elektrodenschicht 144 mit einer mikrostrukturierten diffraktiven Oberflächenstruktur ausgebildet ist, beispielsweise mit einem Beugungsgitter. Auf diese Weise kann die Elektrodenschicht 144 bei wechselnder Beleuchtung bzw. bei wechselnder Blickrichtung wechselnde Farbeffekte ausbilden.

Wenn nun der RFID-Transponder des Sicherheitsdokument 120 in ein Hochfrequenzfeld gebracht ist, kann der aktivierbare Werteindruck 124a aufleuchten. Ein Werteindruck, der durch die Strahlung des Funktelefons 122 oder des Funkschlüssels 123 aktivierbar ist, ist besonders geeignet für den Einsatz bei Geldnoten oder Wertdokumenten, da eine solche Echtheitsprüfung durch jedermann leicht ausführbar ist.

Die vorstehend beschriebene Werteindruck kann als Folienelement ausgebildet sein, in das alle beschriebenen Elemente integriert sind. Ein solches Folienelement kann mit herkömmlichen Kopierverfahren nicht nachgeahmt werden. Es ist auch nicht aus Einzelelementen zusammenstellbar, die u.U. handelsüblich sein könnten.

Die erfindungsgemäßen Sicherheitselemente können als Folienkörper ausgebildet sein, die auf einer Trägerfolie einer Stärke von 10 µm bis 100 µm erzeugt sind. Die Trägerfolie kann vorzugsweise mono-axial oder bi-axial gereckt sein, um eine Verzerrung der Trägerfolie im weiteren Herstellungsprozeß möglichst gering zu halten.

Schichten, die als optisch variable Elemente ausgebildet sind, können als Replizierlackschichten mit einer Dicke von 0,5 µm bis 5 µm, vorzugsweise von 1 µm bis 2 µm, durch ein Druckverfahren aufgebracht werden, in die unter Einwirkung von Hitze und Druck eine diffraktive Struktur repliziert wird. Hierzu wird beispielsweise ein thermoplastischer Replizierlack mittels einer Tiefdruckwalze vollflächig aufgebracht, getrocknet und sodann die diffraktive Struktur mittels einer Prägematrize eingeprägt.

Weiter ist es auch möglich, daß als Replizierlack ein strahlungsvernetzbarer Lack aufgebracht wird und die diffraktive Struktur sodann mittels UV-Replikation in die Replizierlackschicht abgeformt wird.

Elektrodenschichten oder andere leitfähige Schichten, wie Leiterbahnen, können aus einer sehr dünnen Metallschicht, beispielsweise aus Gold oder Silber hergestellt werden. Solche Schichten können bereits strukturiert mittels zum Beispiel eines Druck- oder Bedampfungsverfahrens aufgebracht werden. Es kann aber auch vorgesehen sein, daß die Elektrodenschicht vollflächig aufgebracht wird und sodann mittels Positiv/Negativ-Ätzen oder Laserablation bereichsweise wieder entfernt wird. Auf diese Weise können beispielsweise mikro-demetallisierte Bereiche ausgebildet werden, die den Blick auf darunterliegende Polymer-Displayschichten freigeben. Statt metallischer Schichten können auch Schichten aus transparentem, elektrisch leitfähigem Material vorgesehen sein, beispielsweise aus Indium-Zinn-Oxid oder einem elektrisch leitfähigen Polymer, vorzugsweise Polyanilin oder Polypyrrol.

Polymeranzeige-Elemente können beispielsweise aus einem elektroluminiszierenden Material, wie PPV oder POLY(9,9'-dioctylfluoren) in einer Dicke von ca. 150 nm zwischen zwei Elektrodenschichten aufgebracht werden.

Dadurch, daß in einem Folienelement alle Elemente des erfindungsgemäßen Anzeige- und/oder Sicherheitselements vereint sein können und in einem gemeinsamen Herstellungsprozeß aufbringbar sind, ist eine hohe Passergenauigkeit erreicht und Elektroden, Leiterbahnen usw. als optisch variable Elemente ausbildbar. Es ist auch vorgesehen, optisch variable Elemente als innere Schichten auszubilden, beispielsweise als Elektrodenschicht mit diffraktiver Elektrodenstruktur, die unter einer optischen Funktionsschicht angeordnet ist. Bei der optischen Funktionsschicht kann es sich um eine Licht sammelnde und/oder Licht zerstreuende Makrostruktur handeln, beispielsweise als Mikrolinsen-Feld und/oder Mikroprismen-Feld ausgebildet.

## Patentansprüche

1. Sicherheitselement mit mindestens einem optisch variablen Element,
wobei mindestens eine Schicht des optisch variablen Elements als elektrisch aktive Schicht (13, 14) eines elektronischen Bauelements und/oder eines elektronischen Schaltkreises ausgebildet ist, **dadurch gekennzeichnet, daß** die elektrisch aktive Schicht als eine Elektrode eines optischen Anzeigeelements (10, 20, 30, 40, 50, 60) ausgebildet ist.

2. Sicherheitselement nach Anspruch 1,
**dadurch gekennzeichnet,**
**daß** die elektrisch- aktive Schicht als elektrisch aktive Schicht einer Induktivität und/oder einer Kapazität ausgebildet ist.

3. Sicherheitselement nach einem der vorhergehenden Ansprüche,
**dadurch gekennzeichnet,**
**daß** die elektrisch aktive Schicht als elektrisch aktive Schicht eines elektrischen Schwingkreises ausgebildet ist.

4. Sicherheitselement nach Anspruch 3,
**dadurch gekennzeichnet,**
**daß** die Oberflächenstruktur der elektrisch aktiven Schicht die Resonanzfrequenz und/oder die Güte des Schwingkreises beeinflußt.

5. Sicherheitselement nach einem der vorhergehenden Ansprüche,
**dadurch gekennzeichnet,**
**daß** die elektrisch aktive Schicht als elektrisch aktive Schicht einer RF-Antenne (74a) ausgebildet ist.

6. Sicherheitselement nach einem der vorhergehenden Ansprüche,
**dadurch gekennzeichnet,**
**daß** die elektrisch aktive Schicht als elektrisches Verbindungselement (91I) ausgebildet ist.

7. Sicherheitselement nach einem der vorhergehenden Ansprüche,
**dadurch gekennzeichnet,**
**daß** die elektrisch aktive Schicht als mikro-demetallisierte Schicht oder mikro-metallisierte Schicht ausgebildet ist.

8. Sicherheitselement nach einem der vorhergehenden Ansprüche,
**dadurch gekennzeichnet,**
**daß** die elektrisch aktive Schicht als metallische Schicht ausgebildet ist.

9. Sicherheitselement nach einem der vorhergehenden Ansprüche,
**dadurch gekennzeichnet,**
**daß** die elektrisch aktive Schicht als nichtmetallische Schicht ausgebildet ist.

10. Sicherheitselement nach einem der vorhergehenden Ansprüche,,
**dadurch gekennzeichnet,**
**daß** die elektrisch aktive Schicht als organische Schicht ausgebildet ist.

11. Sicherheitselement nach einem der vorhergehenden Ansprüche,
**dadurch gekennzeichnet,**
**daß** die elektrisch aktive Schicht einen Teilbereich des optisch variablen Elements bildet.

12. Sicherheitselement nach einem der vorhergehenden Ansprüche,
**dadurch gekennzeichnet,**
**daß** die elektrisch aktive Schicht von mindestens einer Deckschicht (15, 46, 56, 66) überdeckt ist.

13. Sicherheitselement nach Anspruch 12,
**dadurch gekennzeichnet,**
**daß** die Deckschicht eine transparente Schicht ist, die eine diffraktives Oberflächenrelief eines weiteren optisch variablen Elements aufweist.

14. Sicherheitselement nach Anspruch 12,
**dadurch gekennzeichnet,**
**daß** die Deckschicht ein Mikrolinsen- und/oder Mikroprismen-Feld aufweist.

15. Sicherheitselement nach Anspruch 12,
**dadurch gekennzeichnet,**
**daß** die Deckschicht eine transparente Schicht ist, in die eine Makrostruktur abgeformt ist.

16. Sicherheitselement nach Anspruch 12,
**dadurch gekennzeichnet,**
**daß** die Deckschicht (15, 46, 56, 66) über dem optischen Anzeigeelement (10, 20, 30, 40, 50, 60) angeordnet ist.

17. Sicherheitselement nach Anspruch 12,
**dadurch gekennzeichnet,**
**daß** die Deckschicht unter dem optischen Anzeigeelement (10, 20, 30, 40, 50, 60) angeordnet ist.

18. Sicherheitselement nach den Ansprüchen 15 und 16,
**dadurch gekennzeichnet,**
**daß** die Deckschicht so ausgebildet ist, daß das von dem optischen Anzeigeelement (10, 20, 30, 40, 50, 60) ausgesandte Bild einem Betrachter als stereoskopisches Bild erscheint.

## Claims

1. Security element comprising at least one optically variable device,
at least one layer of the optically variable device being formed as an electrically active layer (13, 14) of an electronic component and/or of an electronic circuit,
**characterized in that** the electrically active layer is formed as an electrode of an optical display element (10, 20, 30, 40, 50, 60).

2. Security element according to Claim 1,
**characterized**
**in that** the electrically active layer is formed as an electrically active layer of an inductance and/or of a capacitance.

3. Security element according to one of the preceding claims,
**characterized**
**in that** the electrically active layer is formed as an electrically active layer of an electrical resonant circuit.

4. Security element according to Claim 3,
**characterized**
**in that** the surface structure of the electrically active layer influences the resonant frequency and/or the quality factor of the resonant circuit.

5. Security element according to one of the preceding claims,
**characterized**
**in that** the electrically active layer is formed as an electrically active layer of an RF antenna (74a).

6. Security element according to one of the preceding claims,
**characterized**
**in that** the electrically active layer is formed as an electrical connecting element (911).

7. Security element according to one of the preceding claims,
**characterized**
**in that** the electrically active layer is formed as a micro-demetalized layer or micro-metalized layer.

8. Security element according to one of the preceding claims,
**characterized**
**in that** the electrically active layer is formed as a metallic layer.

9. Security element according to one of the preceding claims,
**characterized**
**in that** the electrically active layer is formed as a non-metallic layer.

10. Security element according to one of the preceding claims,
**characterized**
**in that** the electrically active layer is formed as an organic layer.

11. Security element according to one of the preceding claims,
**characterized**
**in that** the electrically active layer forms a partial region of the optically variable device.

12. Security element according to one of the preceding claims,
**characterized**
**in that** the electrically active layer is covered by at least one cover layer (15, 46, 56, 66).

13. Security element according to Claim 12,
**characterized**
**in that** the cover layer is a transparent layer having a diffractive surface relief of a further optically variable device.

14. Security element according to Claim 12,
**characterized**
**in that** the cover layer has a microlens and/or microprism array.

15. Security element according to Claim 12,
**characterized**
**in that** the cover layer is a transparent layer into which a microstructure is impressed.

16. Security element according to Claim 12,
**characterized**
**in that** the cover layer (15, 46, 56, 66) is arranged above the optical display element (10, 20, 30, 40, 50, 60).

17. Security element according to Claim 12,
**characterized**
**in that** the cover layer is arranged below the optical display element (10, 20, 30, 40, 50, 60).

18. Security element according to Claims 15 and 16,
**characterized**
**in that** the cover layer is formed in such a way that the image emitted by the optical display element (10, 20, 30, 40, 50, 60) appears as a stereoscopic image to an observer.

## Revendications

1. Élément de sécurité avec au moins un élément optiquement variable, sachant qu'au moins une couche de l'élément optiquement variable est formée en tant que couche électriquement active (13, 14) d'un composant électronique et/ou d'un circuit électronique, sachant que la couche électriquement active couche est formée en tant qu'électrode d'un élément d'affichage optique (10, 20, 30, 40, 50, 60).

2. Élément de sécurité selon la revendication 1, **caractérisé en ce que** la couche électriquement active est formée en tant que couche électriquement active d'une inductivité et/ou d'une capacité.

3. Élément de sécurité selon l'une quelconque des revendications précédentes, **caractérisé en ce que** la couche électriquement active est formée en tant que couche électriquement active d'un circuit oscillant électrique.

4. Élément de sécurité selon la revendication 3, **caractérisé en ce que** la structure à la surface de la couche électriquement active a une influence sur la fréquence de résonance et/ou le facteur de qualité du circuit oscillant.

5. Élément de sécurité selon l'une quelconque des revendications précédentes, **caractérisé en ce que** la couche électriquement active est formée en tant que couche électriquement active d'une antenne radioélectrique (74a).

6. Élément de sécurité selon l'une quelconque des revendications précédentes, **caractérisé en ce que** la couche électriquement active est formée en tant qu'élément de liaison électrique (911).

7. Élément de sécurité selon l'une quelconque des revendications précédentes, **caractérisé en ce que** la couche électriquement active est formée en tant que couche micro-démétallisée ou couche micro-métallisée.

8. Élément de sécurité selon l'une quelconque des revendications précédentes, **caractérisé en ce que** la couche électriquement active est formée en tant que couche métallique.

9. Élément de sécurité selon l'une quelconque des revendications précédentes, **caractérisé en ce que** la couche électriquement active est formée en tant que couche non métallique.

10. Élément de sécurité selon l'une quelconque des revendications précédentes, **caractérisé en ce que** la couche électriquement active est formée en tant que couche organique.

11. Élément de sécurité selon l'une quelconque des revendications précédentes, **caractérisé en ce que** la couche électriquement active forme une zone partielle de l'élément optiquement variable.

12. Élément de sécurité selon l'une quelconque des revendications précédentes, **caractérisé en ce que** la couche électriquement active est recouverte par au moins une couche de recouvrement (15, 46, 56, 56).

13. Élément de sécurité selon la revendication 12, **caractérisé en ce que** la couche de recouvrement est une couche transparente qui comporte un relief superficiel diffractant d'un autre élément optiquement variable.

14. Élément de sécurité selon la revendication 12, **caractérisé en ce que** la couche de recouvrement comporte une microlentille et/ou un champ de microprismes.

15. Élément de sécurité selon la revendication 12, **caractérisé en ce que** la couche de recouvrement est une couche transparente dans laquelle est formée une macrostructure.

16. Élément de sécurité selon la revendication 12, **caractérisé en ce que** la couche de recouvrement (15, 46, 56, 66) est disposée au-dessus de l'élément d'affichage optique (10, 20, 30, 40, 50, 60).

17. Élément de sécurité selon la revendication 12, **caractérisé en ce que** la couche de recouvrement est disposée en dessous de l'élément d'affichage optique (10, 20, 30, 40, 50, 60).

18. Élément de sécurité selon les revendications 15 et 16, **caractérisé en ce que** la couche de recouvrement est formée de sorte que l'image émise par l'élément d'affichage (10, 20, 30, 40, 50, 60) apparaît à un observateur en tant qu'image stéréoscopique.
